Europäisches Patentamt

European Patent Office

Office européen des brevets

(11) Veröffentlichungsnummer : **0 081 036**
**B1**

(12) # EUROPÄISCHE PATENTSCHRIFT

(45) Veröffentlichungstag der Patentschrift :
26.06.85

(21) Anmeldenummer : 82107586.8

(22) Anmeldetag : 19.08.82

(51) Int. Cl.⁴ : **H 04 M 1/23**, H 01 H 13/70

(54) **Tastenblock für Fernmeldegeräte, insbesondere Fernsprechapparate.**

(30) Priorität : 05.12.81 DE 3148299

(43) Veröffentlichungstag der Anmeldung :
15.06.83 Patentblatt 83/24

(45) Bekanntmachung des Hinweises auf die Patenterteilung : 26.06.85 Patentblatt 85/26

(84) Benannte Vertragsstaaten :
AT BE CH GB LI LU NL SE

(56) Entgegenhaltungen :
EP-A- 0 003 334
EP-A- 0 005 175
DE-A- 2 516 527

(73) Patentinhaber : KRONE GmbH
Goerzallee 311
D-1000 Berlin 37 (DE)

(72) Erfinder : Warnecke, Günter
Alt-Mariendorf 25B
D-1000 Berlin 42 (DE)
Erfinder : Pein, Hans-Jürgen
Potsdamer Strasse 2a
D-1000 Berlin 45 (DE)

(74) Vertreter : Patentanwälte Beetz sen. - Beetz jun.
Timpe - Siegfried - Schmitt-Fumian
Steinsdorfstrasse 10
D-8000 München 22 (DE)

## Beschreibung

Die Erfindung betrifft einen Tastenblock für Fernmeldegeräte, insbesondere für Fernsprechapparate, mit begrenztem Kontaktfederhub, mit variablem Tastenhub, mit der Möglichkeit, externe Schaltglieder anzusteuern, mit Einzelkontaktfedern bei Verwendung als Einzeltaste oder zum zellen- und spaltenweisen Anordnen zu einem Tastenblock beliebiger Größe, mit Kontaktfederbändern gleicher Kontur ihrer Segmente wie den Einzelkontaktfedern zur Darstellung eines Codierschemas in Tastenblöcken in Kompaktbauweise.

Tastenblöcke für Fernmeldegeräte sind mittlerweile in den unterschiedlichsten Ausführungen bekannt geworden. In diesen Tastenblöcken sind Codierfedern angeordnet, die es ermöglichen, die gedruckte Taste innerhalb eines Tastenblockes zu identifizieren, um die entsprechenden Signale weiterzuleiten.

So ist nach der DE-OS 26 58 706 ein Tastenblock bekannt, der eine Codierfedereinheit und eine Codierleiterplatte besitzt. Hierbei ist die Codierfedern bei nicht gedrückter Taste vorgespannt, erst nach dem Drücken der Taste wird die Feder entspannt und kommt mit der Codierleiterplatte in Kontakt.

Nachteilig ist hierbei, daß im Augenblick der Kontaktgabe die Federkraft gering ist und die Feder im Augenblick der nicht gedrückten Taste am stärksten belastet wird.

Aus der EP-A-0 005 175 ist ein Tastenblock für Fernmeldegeräte, insbesondere Fernsprechapparate bekannt, bei dem Zeilenfedern und Spaltenfedern als Zeilenfederband und Spaltenfederband im Tastenblock in Kompaktbauweise in entsprechender Anzahl kreuzweise übereinanderliegen und ein Codierschema darstellen.

Schließlich ist es aus der DE-A-25 16 527 bekannt, Tastenschalter mittels am Gehäuseteil befindlicher Schwalbenschwanzführungen zeilen- und spaltenweise zu einem Tastenblock beliebiger Größe zusammenzustellen.

Ein Nachteil einiger bekannter Tastenblöcke ist die Länge der Kontaktfedern. Aufgrund des langen vorgegebenen Tastenhubes müssen auch die Codierfedern einen langen Federweg zurücklegen.

Dies führte zu aufwendigen Gestaltungen der Kontaktfedern, die z. B. spiralförmig konstruiert wurden, um sie so auf kleinstem Raum unterzubringen.

Diese Kontaktfedern haben den Nachteil, daß sie sehr störanfällig sind ; Knickkanten und Brüche der Federn sind keine Seltenheit.

Es ist daher ein seit langem ungelösten dringendes Bedürfnis, einen Tastenblock mit Tastenschaltern zu konstruieren, der diese Nachteile vermeidet.

Der Erfindung liegt daher die Aufgabe zugrunde, in einem Tastenblock die erwähnte Störanfälligkeit der Kontaktfedern in Tastenschaltern zu vermeiden.

Durch den neuen Tastenblock werden folgende wesentliche erfindungsbestimmende Vorteile erreicht :

1) Der Federweg der Codierfedern ist im Vergleich zum Tastenhub gering, so daß die Federlänge und somit die Federabmessungen platzsparend dimensioniert sind.

2) Durch Größenänderungen der Anschläge kann der Tastenhub beliebig verändert werden.

3) Wenn die Kontakte geschlossen sind (Taste gedrückt), ist auch die Kontaktkraft am größten. Hierdurch wird eine gute Kontaktgabe erreicht.

4) Jeder Tastenschalter des Tastenblocks ist als selbständige Einzeltaste funktionstüchtig.

5) Durch Aneinanderreihung mehrerer Tastenschalter ist ein Tastenblock beliebiger Größe herstellbar.

6) Durch Verwendung eines Schiebers ist die Ansteuerung eines externen Schaltgliedes möglich. Besteht der aus Einzeltasten zusammengesteckte Tastenblock aus einer Spalte, ist die Ansteuerung dieses Schaltgliedes direkt möglich, besteht er aus zwei oder mehr Spalten, kann diese über ein in bekannter Bauweise angeordnetes, gemeinsames mechanisches Zwischenglied geschehen.

7) Beliebige Codierschemata sind durch entsprechende Verbindungen der Tastenchalter durch Leiterbahnen auf einer Leiterplatte möglich.

8) Die Zeilen- und Spaltenfedern, die als Stanzteile in Streifenform zur Codierung in Tastenwahlblöcken in Kompaktbauweise verwendet werden, können für die Einzeltaste mit denselben Werkzeugen hergestellt werden, da die Konturen der einzelnen Federsegmente gleich sind.

Die genannte Aufgabe wird bei einem Tastenblock der als aus der EP-A-0 005 175 bekannt zitierten Art erfindungsgemäß dadurch gelöst, daß die Tastenschalter aus je einem in einem Gehäuseoberteil mit Hilfe von in Öffnungen eingreifenden Rastnasen einrastbaren Gehäusenterteil, aus je einer im Gehäuseorberteil in einer Bohrung geführten Taste und einem durch einem Mitnahmer betätigten, gemeinsamen Schieber zum Ansteuern externer Schaltglieder aufgebaut sind, daß je ein Stößel, der an der Stirnseite eine Stößeldruckfeder in einer Bohrung aufnimmt und an seiner Mantelfläche zwei in Führungen geführte Anschlagnasen aufweist, nach Überwindung der Stößeldruckfederkraft in der Tastenhülse der Taste einschiebbar angeordnet ist und daß die Tastenschalter mittels ihrer am Gehäuseunterteil befindlichen Schwalbenschwanzführungen zeilen- und spaltenweise zu einem Tastenblock beliebiger Größe zusammenstellbar sind.

Nach dem Schließen der Kontakte der Spalten- und Zeilenfeder erfolgt das Anschlagen des Stößels, wodurch ein weiteres Durchbiegen der Kontaktfedern verhindert wird. Der noch verbleibende Tastenhub wird zurückgelegt, indem sich die Tastenhülse bis zum Tastenanschlag über den sich in seiner Endstellung befindlichen Stößel schiebt.

Vorteilhafte weitere Ausgestaltungen der Erfindung sind in den Unteransprüchen gekennzeichnet.

Die Erfindung wird anhand der in den Zeichnungen dargestellten Ausführungsbeispiele näher erläutert ; es zeigen :

Figur 1 einen Tastenschalter des Tastenblocks im Ruhezustand in der Vorderansicht, wobei das Gehäuseober- und das Gehäusenterteil im Schnitt dargestellt sind ;

Figur 2 die Seitenansicht nach Fig. 1 im Vollschnitt ;

Figur 3 einen Bewegungsablauf beim Drücken der Taste, wobei der linke Tastenschalter das Schließen der Kontakte von Spalten- und Zeilenfeder, der mittlere das Anschlagen des Stößels und der rechte den gedrückten Zustand der Taste in der Vorderansicht darstellen ;

Figur 4 die Stellung des Schiebers bei gedrückter und nicht gedrückter Taste ;

Figur 5 die Draufsicht nach Fig. 3 bzw. 4 mit mehreren Tastenschaltern, die zu einem Tastenblock zusammengesteckt sind ; und

Figur 6 jeweils ein Spaltenfeder- und Zeilenfederband mit einer Taste für einen Tastenblock in Kompaktbauweise in perspektivischer Darstellung.

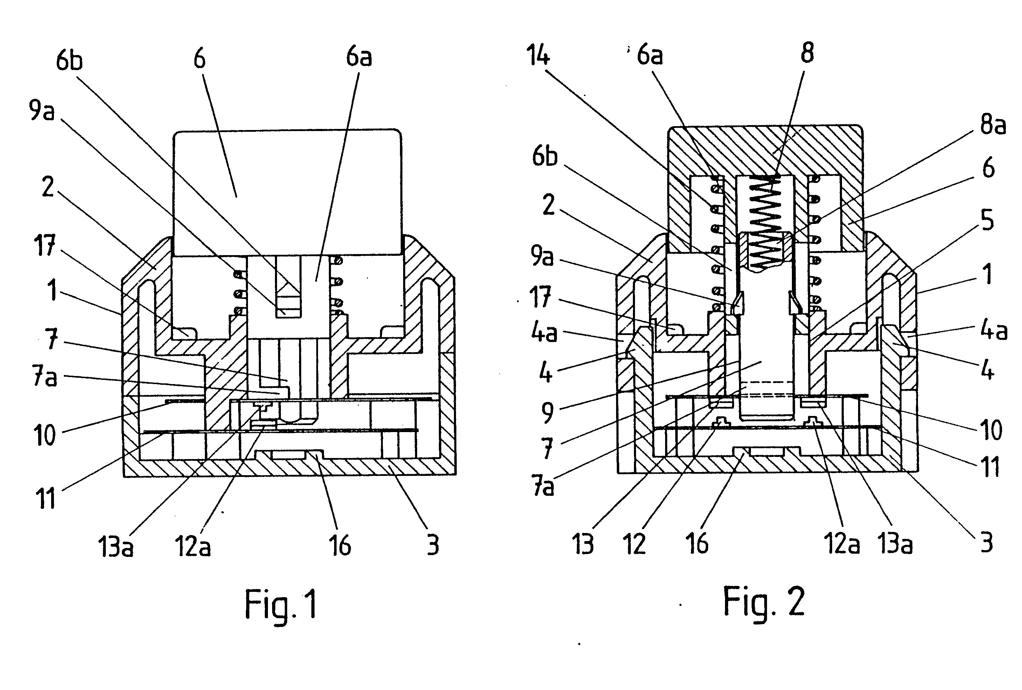

Die Figuren 1 und 2 zeigen den Aufbau eines Tastenschalters 1. So besteht der Tastenschalter 1 aus einem in einem Gehäuseoberteil 2 mit Hilfe von in Öffnungen 4a eingreifenden Rastnasen 4 einrestbaren Gehäuseunterteil 3 und aus einer im Gehäuseoberteil 2 in einer Bohrung 5 geführten Taste 6.

Ferner ist in den Figuren 1 und 2 ein Stößel 7 dargestellt, der in der Tastenhülse 6a der Taste 6 Federnd verschiebbar angeordnet ist.

Die Stößeldruckfeder 8 ist an einem Ende in einer Bohrung 8a an der Stirnseite des Stößels 7 gelagert.

An der Mantelfläche 9 des Stößels 7 sind zwei in Führungen 6b der Taste 6 geführte Anschlagnasen 9a angeordnet.

Weiterhin sind im Gehäuseunterteil 3 die Spaltenfeder 10 und die Zeilenfeder 11 mit den Kontakten 13, 13a bzw. 12, 12a dargestellt.

Hierbei liegt die Spaltenfeder 10 in einer Nut 7a des Stößels 7.

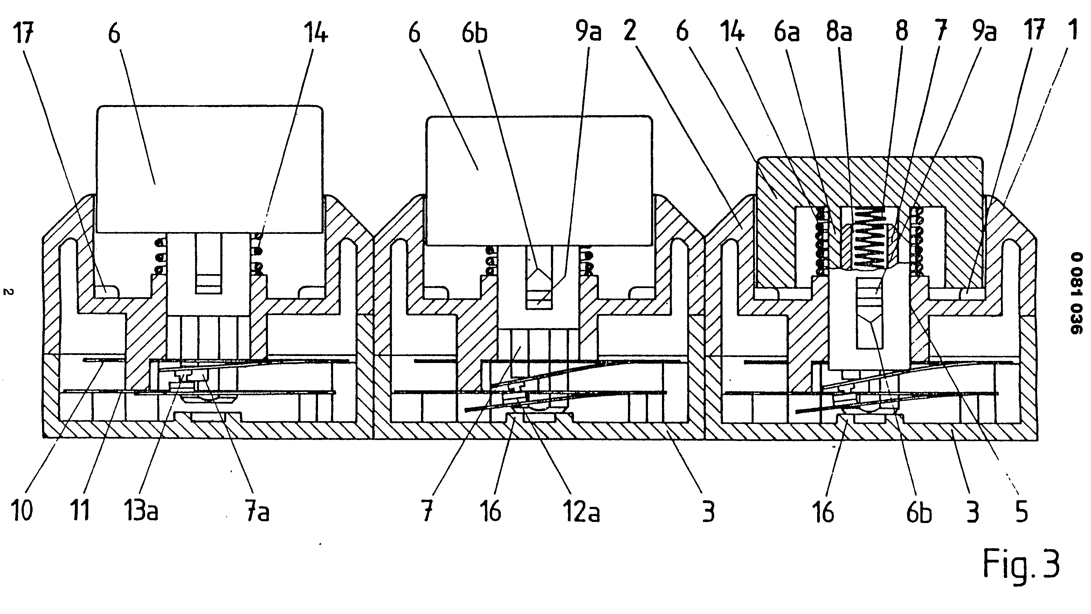

Wird nun die Taste 6 gedrückt, so wird, wie die Fig. 3 (links) zeigt, der Stößel 7 über die Stößeldruckfeder 8 nach unten bewegt.

Er nimmt die Spaltenfeder 10, die in seiner Nut 7a liegt, nach Durchlaufen der Nutbreite mit. Die Spaltenfeder 10 betätigt über die Kontakte 13, 13a und 12, 12a die Zeilenfeder 11. Die momentane Kraft der Stößeldruckfeder 8 ist hierbei größer als die Summe der maximalen Auslenkkräfte der Spalten- und Zeilenfeder 10, 11.

Die Fig. 3 (Mitte) zeigt, daß der Stößel 7 bis zu seinem Stößelanschlag 16 nach unten bewegt wird und hierbei die Spaltenfeder 10 und die Zeilenfeder 11 in ihre Endstellungen bringt.

In dieser Stellung haben beide Federn 10, 11 ihren gesamten Federweg zurückgelegt. Die Zeilenfeder 11 erzeugt hier ihre erforderliche Kontaktkraft. Wie die mittlere Zeichnung der Fig. 3 weiterhin zeigt, ist der vorgegebene Hub der Taste 6 noch nicht vollständig zurückgelegt. Um diesen Tastenhub zu ermöglichen, schiebt sich, wie die Fig. 3 (rechts) zeigt, die Tastenhülse 6a über den an seinem Stößelanschlag 16 befindlichen, mit seinen Anschlagnasen 9a in den Führungen 6b der Tastenhülse 6a geführten Stößel 7. Hierbei wird die Federkraft der Stößeldruckfeder 8 überwunden, bis die Taste 6 selbst am Tastenanschlag 17 anliegt.

Durch Größenänderungen des Tastenanschlages 17 kann der Tastenhub der Taste 6 variabel gestaltet werden.

Die Rückstellfeder 14 besitzt in dieser Stellung ihre größte Federkraft und bringt die Taste 6 beim Loslassen in bekannter Weise in ihre Ausgangsstellung zurück.

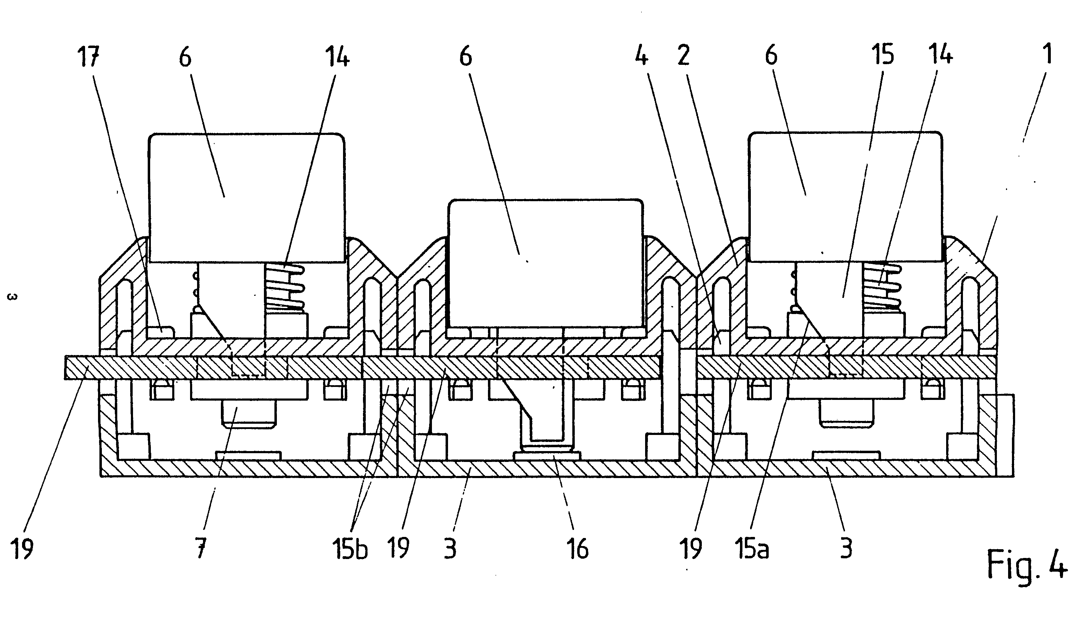

Die Fig. 4 zeigt in einer weiteren Ansicht der zu einem Tastenblock zusammengesteckten Tastenschalter 1, daß an der Taste 6 ein Mitnehmer 15 angeordnet ist. Dieser Mitnehmer 15 besitzt eine Schräge 15a, die einen Schieber 19 durch eine Öffnung 15b des Tastenschalters 1 selbst und durch eine Öffnung 15b des benachbarten Tastenschalters 1 schiebt, um so auch den benachbarten Schieber 19 in Bewegung zu setzen, bis ein nicht dargestelltes Schaltglied betätigt wird, unabhängig davon, welche Taste 6 des Tastenblockes gedrückt wurde.

Die Fig. 4 stellt dar, daß die mittlere Taste 6 gedrückt ist und dadurch die Schieber 19 des mittleren und linken Tastenschalters 1 verschoben sind.

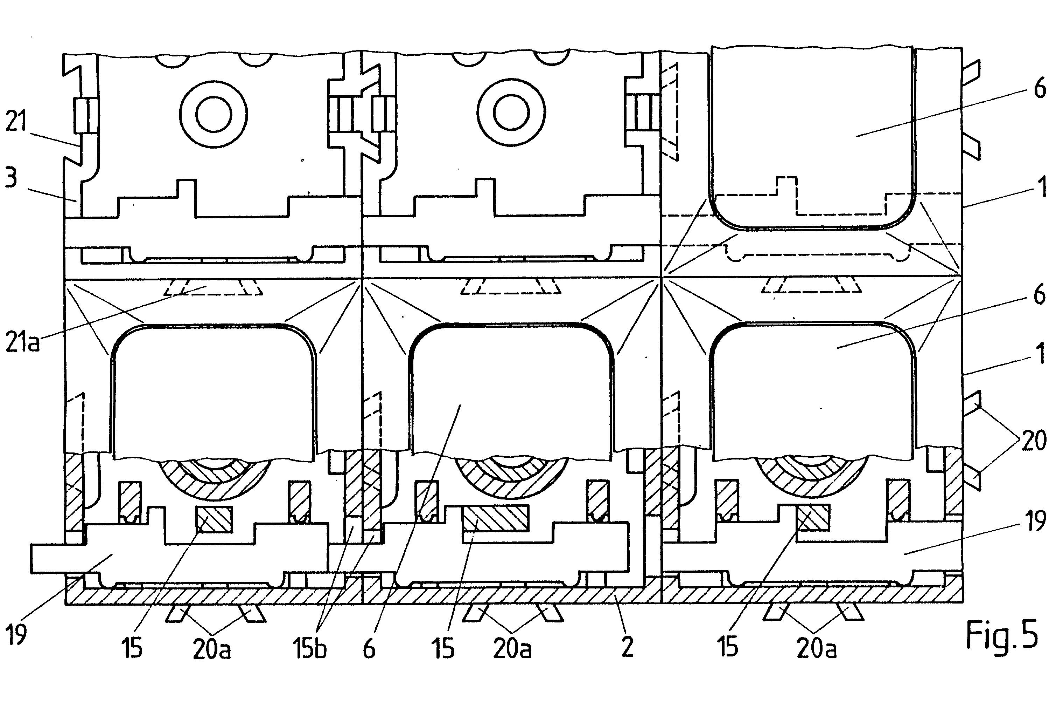

Die Fig. 5 zeigt, daß der Tastenschalter 1 seitlich am Gehäuseunterteil 3 Schwalbenschwanzführungen 20, 20a und 21, 21a aufweist, die es ermöglichen, daß durch Aneinanderreihen mehrerer Tastenschalter 1 ein Tastenblock beliebiger Größe zusammenstellbar ist.

Auch die Fig. 5 zeigt die Stellung des Schiebers 19 nach Fig. 4, wobei die mittlere Taste 6 gedrückt ist.

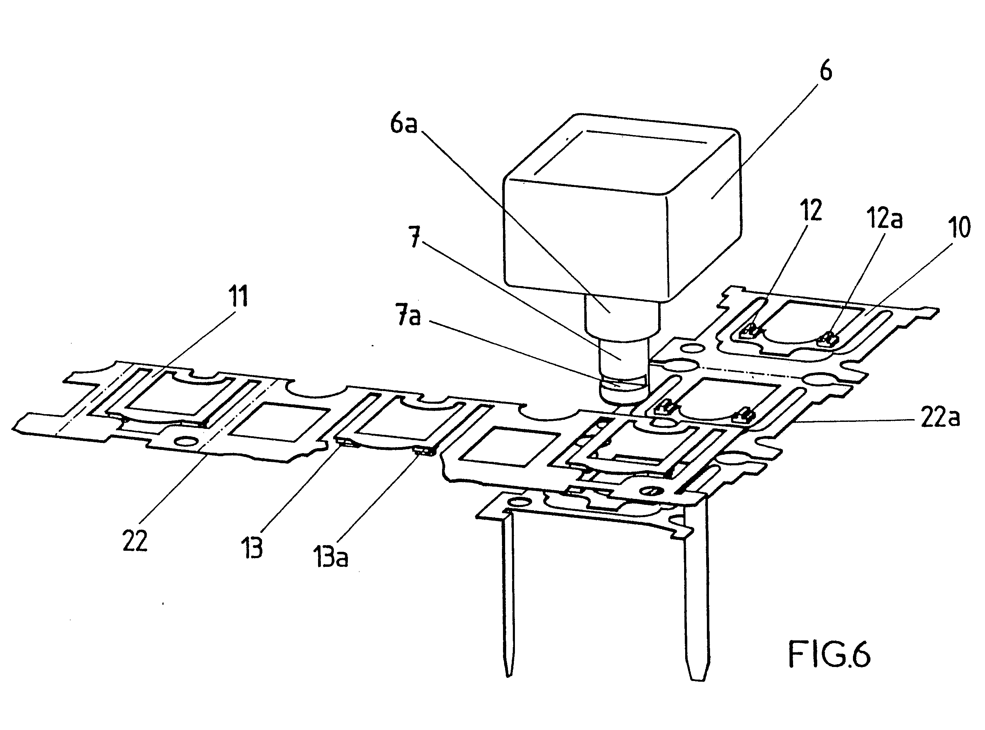

Die Fig. 6 zeigt das Spaltenfederband 22 und das Zeilenfederband 22a für einen Tastenwahlblock in Kompaktbauweise. Die Einzelkontaktfedern — Zeilenfeder 10, Spaltenfeder 11 — stellen je ein Segment dieser Kontaktfederbänder dar. Das Spaltenfederband 22 und das Zeilenfederband 22a liegen in der entsprechenden Anzahl kreuzweise übereinander und stellen somit ein Codierschema dar. Darüber hinaus ist die Taste 6 mit dem Stößel 7 dargestellt, wobei in dieser Figur das Segment des Spaltenfederbandes 22 nicht in der Nut 7a des Stößels 7 anliegt, um den Vorgang besser darstellen zu können.

**Patentansprüche**

1. Tastenblock für Fernmeldegeräte, insbesondere Fernsprechapparate, bei dem Zeilenfedern und Spaltenfedern als Zeilenfederband und Spaltenfederband im Tastenblock in Kompaktbauweise in entsprechender Anzahl kreuzweise übereinanderliegen und ein Codierschema darstellen, dadurch gekennzeichnet, daß die Tastenschalter (1) aus je einem in einem Gehäuseoberteil (2) mit Hilfe von in Öffnungen (4a) eingreifenden Rastnasen (4) einrastbaren Gehäuseunterteil (3), aus je einer im Gehäuseoberteil (2) in einer Bohrung (5) geführten Taste (6) und einem durch einen Mitnehmer (15) betätigten gemeinsamen Schieber (19) zum Ansteuern externer Schaltglieder aufgebaut sind, daß je ein Stößel (7), der an der Stirnseite eine Stößeldruckfeder (8) in einer Bohrung (8a) aufnimmt und an seiner Mantelfläche (9) zwei in Führungen (6b) geführte Anschlagnasen (9a) aufweist, nach Überwindung der Stößeldruckfederkraft in der Tastenhülse (6a) der Taste (6) einschiebbar angeordnet ist und daß die Tastenschalter (1) mittels ihrer am Gehäuseunterteil (3) befindlichen Schwalbenschwanzführungen (20, 20a und 21, 21a) zeilen- und spaltenweise zu einem Tastenblock beliebiger Größe zusammenstellbar sind.

2. Tastenblock nach Anspruch 1, dadurch gekennzeichnet, daß im Gehäuseunterteil (3) eine Spaltenfeder (10) und eine Zeilenfeder (11) mit den Kontakten (13, 13a, 12, 12a) angeordnet sind.

3. Tastenblock nach Anspruch 1, dadurch gekennzeichnet, daß der Kontaktfederhub der Spaltenfeder (10) un der Zeilenfeder (11) durch einen Stößelanschlag (16) und der Tastenhub durch einen Tastenanschlag (17) begrenzt sind, wobei der Zeitpunkt des Anschlagens des Stößels (7) wesentlich früher als der oder gleich dem der Taste sein kann, um eine nicht mehr als nötige Kontaktfederbelastung zu erreichen.

4. Tastenblock nach Anspruch 1, dadurch gekennzeichnet, daß der Stößel (7) eine Nut (7a) aufweist, in die die Spaltenfeder (10) derart eingreift, daß die Taste (6) über den Stößel (7) im Gehäuseoberteil (2) des Tastenschalters (1) gehalten wird und beim Drücken der Taste (6) die Spaltenfeder (10) mitnimmt.

5. Tastenblock nach Anspruch 1, dadurch gekennzeichnet, daß die momentane Kraft der Stößeldruckfeder (8) größer als die Summe der Kräfte der Spalten- und Zeilenfeder (10, 11) ist.

6. Tastenblock nach Anspruch 1, dadurch gekennzeichnet, daß die Einzelkontaktfedern die gleiche Kontur wie die Segmente des jeweiligen Kontaktfederbandes aufweisen.

## Claims

1. A key-pad for telecommunication apparatus, especially for telephone sets, in which row springs and column springs are provided as row-spring band and column-spring band in corresponding numbers in a compact design within the key-pad in crosswise superposed relationship and represent a code pattern, characterised in that each key switch (1) is composed of a housing lower part (3) adapted to be latched in a housing upper part (2) by means of detents (4) engaging in openings (4a), of a key (6) guided within a bore (5) in the housing upper part (2), and of a common slide (19) actuated by a dog (15) for driving external contact members, that a respective plunger (7), which at its end face receives a plunger compression spring (8) within a bore (8a) and on its outer surface (9) is provided with two stop lugs (9a) guided in guideways (6b), is adapted to be pushed into the key sleeve (6a) of the key (6) after having overcome the force of the plunger compression spring, and that the key switches (1) by means of their dovetails (20, 20a and 21, 21a), which are provided on the housing lower part (3), are adapted to be composed by rows and columns to form a key-pad of any desired size.

2. A key-pad as claimed in claim 1, characterised in that a column spring (10) and a row spring (11) including the contacts (13, 13a, 12, 12a) are provided in the housing lower part (3).

3. A key-pad as claimed in claim 1, characterised in that the contact spring stroke of the column spring (10) and of the row spring (11) is limited by a plunger abutment (16) and the key stroke is limited by a key abutment (17), the time of impact of the plunger (7) being substantially earlier than or equal to that of the key so as to avoid any unnecessary load on the contact springs.

4. A key-pad as claimed in claim 1, characterised in that the plunger (7) is provided with a groove (7a) in which the column spring (10) engages such that the key (6) is held through the plunger (7) in the housing upper part (2) of the key switch (1) and upon depression of the key (6) takes the column spring (10) along.

5. A key-pad as claimed in claim 1, characterised in that the momentary force of the plunger compression spring (8) is greater than the sum of the forces of the column spring and the line spring (10, 11).

6. A key-pad as claimed in claim 1, characterised in that the individual contact springs have the same contour as the segments of the respective contact spring band.

## Revendications

1. Clavier à touches pour appareils de télécommunication, et particulièrement pour appareils téléphoniques, dans lequel les ressorts de lignes et les ressorts de colonnes sous forme de bandes de ressorts de lignes et de bandes de ressorts de colonnes, sont disposés les uns sur les autres en s'entrecroisant, en nombre suffisant pour constituer un clavier à touches de construction compacte et former ainsi un schéma de codage, caractérisé en ce que les commutateurs à touches (1) sont constitués chacun d'une partie de boîtier inférieure (3) s'emboîtant dans une partie de boîtier supérieure (2) à l'aide d'ergots (4) pénétrant dans des ouvertures (4a), d'une touche (6) guidée dans un alésage (5) de la partie de boîtier supérieure (2) et d'un curseur commun (19) entraîné par un élément d'entraînement (15), afin de commander des blocs de commutation externes, en ce qu'un poussoir (7) qui reçoit, dans un alésage (8a) sur sa face frontale, un ressort de compression de poussoir (8) et présente sur sa surface latérale (9) deux ergots de butée (9a) guidés dans des guides (6b), est disposé pour pouvoir être enfoncé dans la gaine de touche (6a) de la touche (6), après avoir surmonté la force du ressort de compression du poussoir et en ce que les commutateurs à touches (1) peuvent être assemblés en lignes et en colonnes pour constituer un clavier à touches de grandeur quelconque à l'aide de guides en queue d'aronde (20, 20a et 21, 21a), situés dans la partie de boîtier inférieure (3).

2. Clavier à touches selon la revendication 1, caractérisé en ce qu'un ressort de colonnes (10) et un ressort de ligne (11) sont disposés, avec les contacts (13, 13a, 12, 12a) dans la partie de boîtier inférieure (3).

3. Clavier à touches, selon la revendication 1, caractérisé en ce que la course du ressort de contact du ressort de colonne (10) et du ressort de ligne (11) est limitée par une butée de poussoir (16), et que la course de la touche est limitée par une butée de touche (17), la butée du poussoir (7) se produisant sensiblement plus tôt ou en même temps que la butée de la touche, afin d'obtenir une sollicitation du ressort de contact ne dépassant pas ce qui est nécessaire.

4. Clavier à touches, selon la revendication 1, caractérisé en ce que le poussoir (7) présente une rainure (7a) dans laquelle pénètre le ressort de colonne (10), de manière à ce que la touche (6) soit maintenue par le poussoir (7) dans la partie de boîtier supérieure (2) du commutateur à touches (1) et entraîne le ressort de colonne (10) quand la touche (6) est enfoncée.

5. Clavier à touches, selon la revendication 1, caractérisé en ce que la force momentanée du ressort de compression du poussoir (8) est supérieure à la somme des forces des ressorts de colonnes et de lignes (10, 11).

6. Clavier à touches, selon la revendication 1, caractérisé en ce que les différents ressorts de contact présentent le même profil que les segments des bandes de ressorts de contact correspondants.

6b  6  6a

9a

2

17

1

7

7a

10

11

13a  12a  16  3

Fig. 1

14  6a  8

8a

6b

2  6

9a  5

17  1

4a  4a

4  4

9  10

7  11

7a

13  12  16  12a  13a  3

Fig. 2

0 081 036

17    6    14    6    6b    9a    2    6    14    6a    8a    8    7    9a    17    1

0 081 036

Fig. 3

10    11    13a    7a    7    16    12a    3    16    6b    3    5

17  6  14  6  4  2  6  15  14  1

3

0 081 036

19  7  15b  19  3  16  19  15a  3

Fig. 4

Fig.5

0 081 036

FIG.6

0 081 036